# FASCICULE DE BREVET EUROPEEN

(11) **EP 1 612 890 B1**
(45) Date de publication et mention de la délivrance du brevet: **02.09.2015**
(21) Numéro de dépôt: 05300549.2
(22) Date de dépôt: 01.07.2005
(51) Int. Cl.: H01R 9/16, H02G 15/103, H02G 15/184, H01R 13/58, H01R 11/12, H01R 13/41, H01R 13/53

(54) **Pièce de connexion pour un cable électrique, en particulier à moyenne tension**
Verbindungsteil für ein elektrisches Kabel, insbesondere für Mittelspannung
Connection piece for electrical cable, in particular for medium voltage

(30) Priorité: 02.07.2004 FR 0451423
(43) Date de publication de la demande: 04.01.2006
(73) Titulaire: Nexans, 75008 Paris (FR)
(72) Inventeur: Cardinaels, Josef, 9230, Wetteren (BE); Vandamme, Björn, 8820, Torhout (BE)
(74) Mandataire: Lenne, Laurence

(56) Documents cités:
- EP-A- 1 233 478
- US-A- 3 535 673
- US-A- 3 605 077
- US-A- 3 699 505
- US-A- 6 002 088

## Description

L'invention concerne un dispositif de raccordement d'un câble électrique selon la revendication 1.

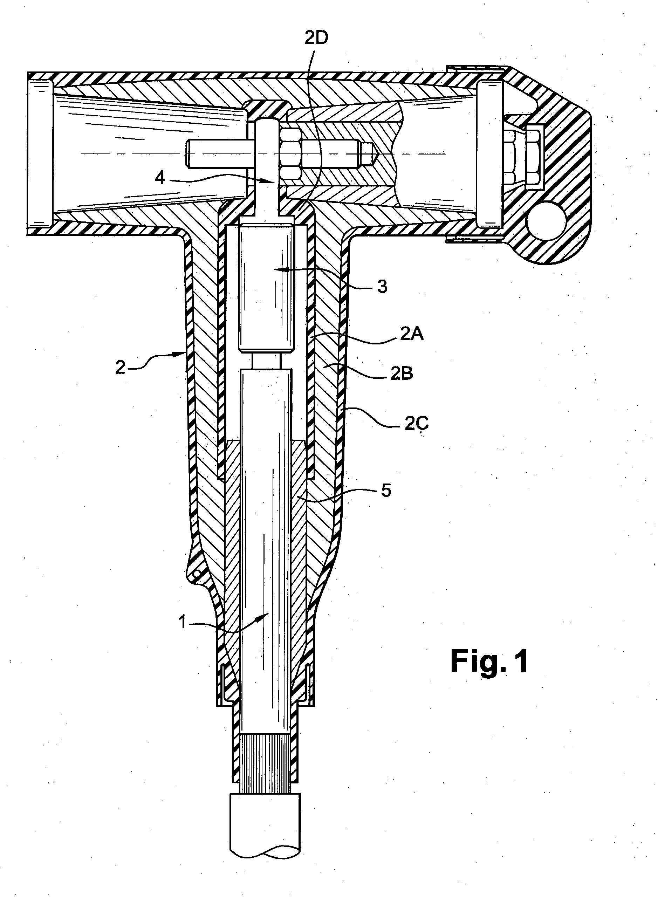

La figure 1 représente un tel dispositif de raccordement équipé d'un câble de transport électrique, moyenne tension, en vue en coupe.

Ce dispositif de raccordement 2 d'équipement électrique est un dispositif en Té et est constitué à l'endroit de la connexion du câble 1 de trois couches de matières élastomères, une première couche interne semi-conductrice 2A, une deuxième couche intermédiaire isolante 2B et un troisième couche semi-conductrice 2C. Dans la cavité cylindrique formée pour recevoir le câble 1, l'extrémité de ce dernier est connectée par une zone de serrage 3 à une pièce de connexion 4 comportant une partie aplatie pourvue d'un orifice de vissage et qui est introduite dans un orifice pratiqué dans la première couche interne 2A formant au fond de la cavité une paroi déformable 2D. Un équipement électrique est ainsi connecté au câble 1 dans une direction perpendiculaire à l'axe longitudinal du câble 1.

Afin de pouvoir utiliser un tel dispositif de raccordement pour une plage de sections de câble, un adaptateur 5 en matière élastomère est enfilé sur le câble 1 et vient combler l'espace entre ce câble et la cavité cylindrique, bloquant ainsi différents diamètres de câbles dans un même dispositif de raccordement. A titre d'exemple, un même dispositif de raccordement peut permettre la connexion de câbles de sections comprises entre 95 à 300 mm².

Ce type d'agencement pose le problème technique suivant.

Le diamètre externe de l'adaptateur augmente proportionnellement au diamètre du câble. Il en résulte que dans les valeurs les plus élevées d'une plage de sections, l'installation du dispositif de raccordement sur le câble et son adaptateur est difficile. En effet, le dispositif de raccordement est poussé manuellement sur l'adaptateur 5 enfilé sur le câble 1 lui-même pourvu de la pièce de connexion 4 et le dispositif de raccordement est déformé par expansion élastique lors de cette insertion. Cette déformation a tendance à provoquer un effort opposé à l'insertion du câble qui oblige une poussée permanente et importante jusqu'à la mise en place de la pièce de connexion 4 et son vissage sur l'équipement électrique raccordé.

La personne montant manuellement le câble sur le dispositif de connexion ne peut donc libérer son effort de poussée avant fixation par vissage. Cette opération s'avère difficile et peut entraîner entre autre la chute du dispositif de raccordement et sa dégradation.

L'invention résout ce problème.

L'invention présente l'avantage technique supplémentaire suivant.

Cet épaulement de butée permettant le blocage de la pièce de connexion et donc du câble dans le dispositif de raccordement, la mise en place est très facilitée, un effort de poussée n'étant nécessaire que lors de l'insertion du câble jusqu'à sa position de raccordement. Dans cette position, il est retenu en place par l'épaulement de butée et la connexion par vissage peut être effectuée sans autre effort sur le câble.

Il en résulte qu'il est possible d'utiliser un même adaptateur pour une plage élargie de sections de câbles par rapport à la plage actuellement utilisée avec un dispositif conforme à l'art antérieur et de standardiser de façon plus importante l'adaptateur.

US 3 699 505 décrit un dispositif de raccordement selon le preambule de la revendication 1.

Les revendications dépendentes divulguent des modes de réalisation supplémentaires de l'invention.

L'invention est décrite ci-après plus en détail à l'aide de figures ne représentant qu'une mode de réalisation préféré de l'invention.

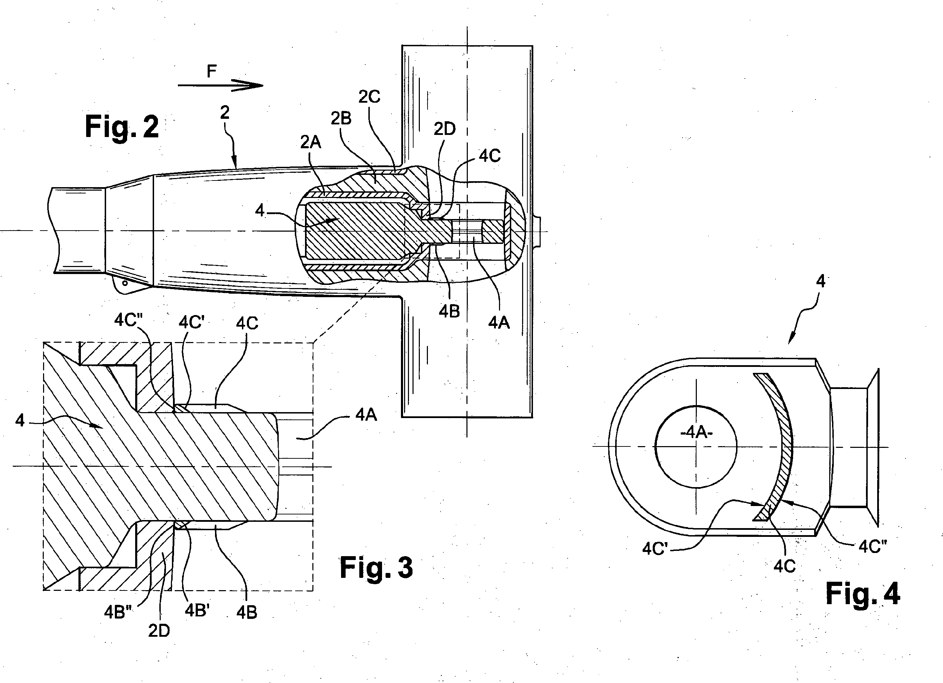

La figure 2 est une vue en coupe partielle d'une pièce de connexion conforme à l'invention, mise en place dans un dispositif de raccordement.

La figure 3 est une vue de détail en coupe de la figure 2.

La figure 4 est une vue schématique de dessus de la pièce de connexion conforme à l'invention.

Le dispositif de raccordement 2 d'équipement électrique est un dispositif en Té et est constitué à l'endroit de la connexion du câble de trois couches de matières élastomères, une première couche interne semi-conductrice 2A, une deuxième couche intermédiaire isolante 2B et un troisième couche semi-conductrice 2C. Dans la cavité cylindrique formée pour recevoir le câble 1, l'extrémité de ce dernier est connectée par une zone de serrage à une pièce de connexion 4 comportant une partie cylindrique destiné à être reliée au câble et une extrémité aplatie pourvue d'un orifice de vissage 4A et qui est introduite dans un orifice pratiqué dans la première couche interne 2A formant au fond de la cavité une paroi déformable 2D.

Ce dispositif de raccordement 2 en Té permet le raccordement d'un câble électrique 1 avec un équipement électrique dans une direction perpendiculaire à l'axe longitudinal de ce câble.

Le câble pourvu de la pièce de connexion 4 est introduit dans le dispositif de raccordement d'équipement électrique, selon une direction F dite direction d'insertion.

Cette pièce de connexion est pourvue d'au moins un épaulement de butée dans une direction opposée à la dite direction d'insertion F, contre la paroi 2D. De préférence, afin d'obtenir un blocage optimal, elle est pourvue d'un épaulement de butée 4B et 4C sur deux faces opposées, qui sont ici les deux faces aplaties de son extrémité de raccordement. Chaque épaulement 4B et 4C est constitué par une bride agencée en saillie sur la pièce de connexion et de forme en arc de cercle afin de venir en contact optimal avec la paroi 2D déformable. Cette bride 4B ou 4C est pourvue d'une face d'insertion biseautée 4B', 4C' permettant l'insertion dans la direction F dans l'orifice de la paroi 2D par déformation de cette paroi et d'une face opposée 4B", 4C" parallèle à la paroi 2D et assurant la fonction d'épaulement de butée contre cette paroi 2D.

Cet épaulement de butée permet le blocage de la pièce de connexion 4 et donc du câble dans le dispositif de raccordement 2, une fois la mise en place par insertion et poussée dans le sens de la flèche F effectuée.

Selon une application préférée représentée sur les figures, le dispositif de raccordement 2 d'un câble électrique 1 avec un équipement électrique au moyen d'une pièce de connexion 4 comme précisée ci-dessus, le câble 1 étant relié mécaniquement et électriquement à la pièce de connexion 4, est associé à un adaptateur 5 du même type que celui représenté sur la figure 1 en matière déformable inséré entre le câble et la cavité cylindrique recevant ce dernier. Grâce à l'invention, cet adaptateur 5 est standard pour une plage large de sections différentes de câbles.

L'invention peut également s'appliquer à un autre type de dispositif de raccordement, à raccordement non perpendiculaire, incliné ou parallèle.

## Revendications

1. Dispositif de raccordement (2) d'un câble électrique (1), en particulier à moyenne tension, avec un équipement électrique au moyen d'une pièce de connexion (4) comportant une extrémité pourvue d'un moyen de liaison de cet autre équipement, le câble (1) étant relié mécaniquement et électriquement à ladite pièce de connexion (4) et inséré dans une cavité cylindrique du dispositif de raccordement, ladite pièce de connexion (4) est destinée à être introduite dans un orifice agencé dans une paroi (2D) du dit dispositif de raccordement (2) d'équipement électrique, selon une direction (F) dite direction d'insertion, et est pourvue d'au moins un épaulement de butée dans une direction opposée à la dite direction d'insertion, contre ladite paroi (2D),
**caractérisé en ce que** le moyen de liaison est par vissage, la paroi (2D) du dit dispositif de raccordement (2) est déformable, le dispositif de raccordement (2) est constitué de matières élastomères, cet épaulement de butée étant distinct du dit moyen de liaison et assurant le maintien de la pièce de connexion durant la mise en place du dit moyen de liaison par vissage, et le dispositif de raccordement est associé à un adaptateur (5) en matière déformable inséré entre le câble et ladite cavité cylindrique.

2. Dispositif selon la revendication 1, **caractérisé en ce que** ladite pièce de connexion est pourvue d'un dit épaulement de butée sur deux faces opposées.

3. Dispositif selon l'une des revendications précédentes, **caractérisé en ce que** ledit épaulement de butée est constitué par une bride (4B, 4C) agencée en saillie sur la pièce de connexion.

4. Dispositif selon l'une des revendications précédentes, dont ladite pièce de connexion comporte une extrémité aplatie pourvue d'un orifice de liaison (4A) d'un équipement électrique, **caractérisé en ce que** ledit épaulement de butée est agencé sur cette extrémité aplatie.

5. Dispositif de raccordement selon l'une des revendications précédentes, **caractérisé en ce que** ledit adaptateur (4) est standard pour une plage de sections différentes de câbles (1).

6. Dispositif de raccordement selon l'une des revendications précédentes, **caractérisé en ce que** ledit équipement électrique est disposé dans une direction perpendiculaire à l'axe longitudinal du câble (1).

## Patentansprüche

1. Anschlussvorrichtung (2) eines elektrischen Kabels (1), insbesondere für Mittelspannung, mit einer elektrischen Ausrüstung mittels eines Verbindungsteils (4), aufweisend eine Ende, das mit einem Verbindungsmittel dieser anderen Ausrüstung ausgestattet ist, wobei das Kabel (1) mechanisch und elektrisch mit dem Verbindungsteil (4) verbunden und in einen zylindrischen Hohlraum der Anschlussvorrichtung eingesetzt ist, wobei das Verbindungsteil (4) dazu bestimmt ist, gemäß einer Einsetzrichtung (F) in eine Öffnung eingesetzt zu sein, die in einer Wand (2D) der Anschlussvorrichtung (2) der elektrischen Ausrüstung ausgebildet ist und mit mindestens einem Anschlagabsatz in einer Richtung entgegengesetzt zur Einsetzrichtung gegen die Wand (2D) ausgestattet ist,
**dadurch gekennzeichnet, dass** das Verbindungsmittel verschraubt wird, die Wand (2D) der Anschlussvorrichtung (2) verformbar ist, die Anschlussvorrichtung (2) aus Elastomermaterialien (2) gebildet ist, wobei sich dieser Anschlagabsatz von dem Verbindungsmittel unterscheidet und den Halt des Verbindungsteils während der Platzierung des Verbindungsmittels durch Schrauben sichert und die Anschlussvorrichtung mit einem Adapter (5) aus verformbaren Material kombiniert ist, der zwischen dem Kabel und dem zylindrischen Hohlraum eingesetzt ist.

2. Vorrichtung nach Anspruch 1, **dadurch gekennzeichnet, dass** das Verbindungsteil mit einem Anschlagabsatz auf zwei gegenüberliegenden Seiten ausgestattet ist.

3. Vorrichtung nach einem der vorangehenden Ansprüche, **dadurch gekennzeichnet, dass** der Anschlagabsatz von einem Flansch (4B, 4C) gebildet ist, der hervorstehend auf dem Verbindungsteil angeordnet ist.

4. Vorrichtung nach einem der vorangehenden Ansprüche, deren Verbindungsteil ein abgeflachtes Ende aufweist, das mit einer Verbindungsöffnung (4A) einer elektrischen Ausrüstung ausgestattet ist, **dadurch gekennzeichnet, dass** der Anschlagabsatz auf diesem abgeflachten Ende ausgebildet ist.

5. Anschlussvorrichtung nach einem der vorangehenden Ansprüche, **dadurch gekennzeichnet, dass** der Adapter (4) für einen Bereich unterschiedlicher Querschnitte von Kabeln (1) Standard ist.

6. Anschlussvorrichtung nach einem der vorangehenden Ansprüche, **dadurch gekennzeichnet, dass** die elektrische Ausrüstung in einer senkrechten Richtung zur Längsachse des Kabels (1) angeordnet ist.

## Claims

1. A connector device (2) for connecting an electric cable (1), in particular medium voltage, with a piece of electric equipment using a connection piece (4) including an end provided with a connecting means for connecting to that other equipment, the cable (1) being mechanically and electrically connected to the connection piece (4) and inserted into a cylindrical cavity of the connector device, said connection piece (4) is designed to be inserted into an orifice arranged in a wall (2D) of said connecting device (2) of the piece of electric equipment, in a direction (F) called insertion direction, and is provided with at least one stop shoulder in a direction opposite said insertion direction, against the wall (2D),
**characterized in that** the connecting means works by screwing, the wall (2D) of said second connector device (2) is deformable, the connector device (2) is made from elastomeric materials, that stop shoulder being separate from said connecting means and ensuring the maintenance of the connection piece during the placement of said connecting means by screwing, and the connector device is associated with an adapter (5) made from a deformable material inserted between the cable and said cylindrical cavity.

2. The device according to claim 1, **characterized in that** said connection piece is provided with a so-called stop shoulder on two opposite faces.

3. The device according to one of the preceding claims, **characterized in that** said stop shoulder is formed by a flange (4B, 4C) arranged protruding on the connection piece.

4. The device according to one of the preceding claims, whereof said connection piece includes a flat end provided with a connecting orifice (4A) for a piece of electric equipment, **characterized in that** said stop shoulder is arranged on that flat end.

5. The connector device according to one of the preceding claims, **characterized in that** said adapter (4) is standard for a range of different cable sections (1).

6. The connector device according to one of the preceding claims, **characterized in that** said electric equipment is positioned in a direction perpendicular to the longitudinal axis of the cable (1).
